# EUROPÄISCHE PATENTANMELDUNG

(11) **EP 2 990 333 A1**
(43) Veröffentlichungstag der Anmeldung: **02.03.2016**
(21) Anmeldenummer: 15180913.4
(22) Anmeldetag: 13.08.2015
(51) Int. Cl.: B64C 27/35, B64C 27/51

(54) **ROTORBLATTKOPPLUNGSVORRICHTUNG EINES ROTORKOPFS FÜR EINEN DREHFLÜGLER**

(30) Priorität: 27.08.2014 CH 12912014; 29.07.2015 CH 11032015
(71) Anmelder: Marenco Swisshelicopter AG, 8330 Pfäffikon (CH)
(72) Erfinder: Stucki, Martin, 8330 Pfäffikon (CH); Caminada, Mario, 7206 Igis (CH); Moser, Patrick Reginald, 8810 Horgen (CH); Leibbrandt, Riekert, Queenswood, Pretoria 0186 (ZA)
(74) Vertreter: Schneider Feldmann AG Patent- und Markenanwälte

(57) **Zusammenfassung**

Bei einer Rotorblattkopplungsvorrichtung (2) zur Kopplung mit einem Rotormast (9) zur Bildung eines Rotorkopfs (1) eines Drehflüglers, insbesondere einen Helikopter oder Hubschrauber, umfassend ein Rotorkopfzentralstück (7), mindestens zwei am Rotorkopfzentralstück (7) befestigte Rotorblatthalterungen (4) zur Aufnahme von mindestens zwei in einer Rotorebene (R_{E}) liegenden Rotorblättern (3), sowie mindestens ein Verbindungsmittel zwischen benachbarten Rotorblatthalterungen (4), soll ein vereinfachter Aufbau der Rotorblattkopplungsvorrichtung (2) erzielt werden und die Rotorblattkopplungsvorrichtung (2) soll eine agile Steuerung erlauben. Dies wird dadurch erreicht, dass die Rotorblattkopplungsvorrichtung (2) als Verbindungsmittel mindestens einen geschlossenen Ring (10) umfasst, wobei der Ring (10) alle Rotorblatthalterungen (4) an jeweils mindestens einem Verbindungsort querend und alle Rotorblatthalterungen (4) miteinander zumindest mittelbar verbindend angeordnet ist.

## Beschreibung

### Technisches Gebiet

Die vorliegende Erfindung betrifft eine Rotorblattkopplungsvorrichtung eines Rotorkopfs für einen Drehflügler wie beispielsweise einen Hubschrauber oder einen Helikopter gemäss dem Oberbegriff des ersten Patentanspruches.

Bei der Rotation der Rotorblätter treten Schlag- und Schwenkbewegungen auf. In diesem Zusammenhang ist bekannt, dass auf die Rotorblätter verschiedene Kräfte wie Trägheitskräfte, Zentrifugalkräfte, Corioliskräfte sowie Luftwiderstandskräfte wirken.

Üblicherweise umfassen Rotorblattkopplungsvorrichtungen ein vertikal zur Rotorebene stehendes Drehgelenk mit einstellbarem Widerstand zwischen einzelnen Rotorblatthalterungen und einem jeweilig zugehörigen, auftriebserzeugenden Rotorblatt, welches für ein jeweiliges Rotorblatt bezüglich einer horizontalen Rotorebene eine in Abhängigkeit der Stellung des jeweiligen Rotorblatts auftretende Bewegung rückwärts, d.h. entgegen der Umlaufrichtung ("lag") eines Rotorblatts, beziehungsweise vorwärts, d.h. in Umlaufrichtung ("lead") eines Rotorblatts, erlaubt. Üblicherweise ist der Widerstand anhand hydraulischer Dämpfungselemente einstellbar, welche solche so genannten lead-lag-Bewegungen verlangsamen beziehungsweise dämpfen. Solche lead-lag-Bewegungen werden hauptsächlich durch Corioliskräfte verursacht, wobei auch Fliehkräfte, Luftwiderstand und Trägheitskräfte Einfluss auf die lead-lag-Bewegungen haben.

### Stand der Technik

Aus dem Stand der Technik war lange als nachteilig bekannt, dass in Umlaufrichtung der Rotorblätter bei der Rotation steife Rotorköpfe nicht oder kaum entsprechend ausgestaltbar sind, den enormen Kräften und Drehmomenten standzuhalten.

Zwar sind aus dem Stand der Technik Helikopter mit zwei Rotorblättern wie der "Bell UH-1" bekannt mit einem halbstarren Rotorkopf, d.h. die beiden Rotorblätter sind starr miteinander verbunden. Bei diesem bekannten Helikopter "Bell UH-1" sind die Rotorblätter jedoch flexibel kardanisch am Rotormast gelagert. Bei der Rotorblattkopplungsvorrichtung können somit vergleichbar wie bei einer Wippe die in einer Rotorebene liegenden Rotorblätter nur gemeinsam auf und ab bewegt werden. Mittels so genannter, zyklischer Blattverstellungen wird die Rotorebene zur durch den Rotormast verlaufenden Rotationsachse verkippt beziehungweise geneigt. Bei einer derartigen zyklischen Steuerung werden die Einstellwinkel der Rotorblätter während des Umlaufs des Rotors zyklisch verändert und dabei unterschiedlich angeströmt und eine gewünschte Neigung erzeugt. Diese Neigung bewirkt einen Schub für eine horizontale Bewegung (vor / zurück / seitlich) des Drehflüglers.

Bei diesen bekannten Helikoptern "Bell UH-1" werden Drehmomente nachteilig nicht direkt in den Rotorkopf übertragen, was zu einer langsamen Reaktionszeit bei der Steuerung führt. Solange der Rotor einen signifikanten Auftrieb produziert, wird eine Auslenkung zur Rotormastachse klein gehalten mittels zyklischer Steuerung. Jedoch können übermässig schnelle beziehungsweise agile Steuerungs-Inputs und insbesondere Manöver bei niedrigen G-Kräften in erheblichen Winkelversätzen beziehungsweise Neigungen der Rotorebene zur Rotorachse resultieren und sogar zum gefürchteten "Mast Bumping", d.h. einer Kollision der Rotorblattanordnung mit dem Rotormast, führen.

Aus US 2008/0159862 A1 ist eine weitere Rotorblattkopplungsvorrichtung bekannt. Dokument US 2008/0159862 A1 offenbart eine Vielzahl von (in Umlaufrichtung der rotierenden Rotorblätter federnden) Dämpfungselementen als Verbindungselemente zwischen jeweils zwei benachbarten Rotorblättern, welche sozusagen ein Feder-Masse-System ausbilden. Die oben erwähnten "lead-lag"-Bewegungen am Rotorkopf werden durch die Dämpfungselemente aus US 2008/0159862 A1 gedämpft.

Die aus US 2008/0159862 A1 bekannte Rotorblattkopplungsvorrichtung mit Dämpfungselementen zwischen jeweils zwei benachbarten Rotorblättern entspricht einem komplizierten Aufbau. So ist im Übergang zwischen den einzelnen Dämpfungselementen und Rotorblatthalterungen eine zusätzliche Anordnung von Gelenken und korrespondierenden Laschen notwendig, welche gleichzeitig einem besonders grossen Wartungsaufwand bedürfen.

### Darstellung der Erfindung

Die vorliegende Erfindung hat sich zur Aufgabe gestellt, die Nachteile der aus dem Stand der Technik bekannten Rotorblattkopplungsvorrichtungen zu überwinden und insbesondere soll ein vereinfachter Aufbau einer Rotorblattkopplungsvorrichtung erzielt werden, wobei die Rotorblattkopplungsvorrichtung eine agile Steuerung erlauben soll.

Diese Aufgaben werden durch eine Rotorblattkopplungsvorrichtung mit den Merkmalen des Patentanspruches 1 gelöst.

Die erfindungsgemässe Rotorblattkopplungsvorrichtung zur Kopplung mit einem Rotormast zur Bildung eines Rotorkopfs eines Drehflüglers umfasst ein Rotorkopfzentralstück und mindestens zwei daran befestigte Rotorblatthalterungen zur Aufnahme und Fixierung von mindestens zwei in einer Rotorebene liegenden Rotorblättern.

Im Weiteren ist mindestens ein Verbindungsmittel zwischen benachbarten Rotorblatthalterungen vorgesehen.

Erfindungsgemäss umfasst die Rotorblattkopplungsvorrichtung als Verbindungsmittel mindestens einen geschlossenen Ring, wobei der Ring alle Rotorblatthalterungen an jeweils mindestens einem Verbindungsabschnitt querend und alle Rotorblatthalterungen miteinander zumindest mittelbar verbindend angeordnet ist. Gemäss einer bevorzugten Weiterbildung der vorliegenden Erfindung durchquert der alle Rotorblatthalterungen querende Ring die Rotorblatthalterungen beziehungsweise der Ring verläuft durch die Rotorblatthalterungen.

Vorzugsweise ist der mindestens eine Ring durch alle Rotorblatthalterungen an dem jeweils mindestens einen Verbindungsabschnitt querend durchgeführt und alle Rotorblatthalterungen miteinander zumindest mittelbar verbindend angeordnet.

Alternativ zu einem die Rotorblatthalterungen durchquerenden Ring ist es denkbar, dass der Ring unter oder über den Rotorblatthalterungen querend aufliegend angeordnet ist. Im Weiteren ist gemäss einer Weiterbildung der vorliegenden Erfindung vorstellbar, dass der Ring zweiteilig eine obere Ringplatte und eine mit der oberen Ringplatte starr verbundene untere Ringplatte umfasst und dass die obere Ringplatte über den Rotorblatthalterungen und die untere Ringplatte unter den Rotorblatthalterungen derart angeordnet ist, um als zweiteilig ausgestalteter Ring die Rotorblatthalterungen zu umschliessen.

Im Sinne der vorliegenden Erfindung wird als zumindest mittelbar verstanden, dass zwischen dem Ring und den Rotorblatthalterungen weitere Verbindungsstücke, wie beispielsweise Dämpfungselemente etc. vorgesehen sein können. Solche Dämpfungselemente dienen dazu, die erwähnten lead-lag-Bewegungen zu verringern. Da eine Dämpfung in Richtung der lead-lag-Bewegungen üblicherweise zu schwach ist, ist eine Dämpfung mittels Dämpfungselementen notwendig, um die Schwingungsanregung am Drehflügler zu minimieren.

Es wurde überraschend gefunden, dass der Ring frei oder beinahe frei von Zentrifugalkräften und Drehmomenten ist, welche durch "blade pitching" beziehungsweise so genannte Blattverstellung verursacht werden. Im Weiteren wird durch die Anordnung des Rings ein vereinfachter Aufbau einer Rotorblattkopplungsvorrichtung erzielt. Besonders bevorzugt ist der erfindungsgemässe Ring kreisförmig ausgebildet, wodurch die Wirkung der Zentrifugalkräfte in besonderem Masse verringert ist. Alternativ kann der erfindungsgemässe Ring auch vieleckig, beispielsweise fünfeckig, ausgebildet sein.

Unter "blade pitching" bzw. Blattverstellung wird ein einstellbarer Anstellwinkel der Rotorblätter gegenüber der anströmenden Luft verstanden, wobei die Blattverstellung durch Drehung um eine im Wesentlichen in Längsrichtung einer jeweiligen Rotorblatthalterung beziehungsweise Rotorblatts verlaufende "blade-pitch"-Achse erfolgt. Üblicherweise spricht man hierbei von einer kollektiven Blattverstellung, wenn der Anstellwinkel aller Rotorblätter gemeinsam und gleichzeitig verstellt wird und der Drehflügler dadurch steigt oder sinkt. Eine zyklische Blattverstellung bezeichnet üblicherweise, wenn der Anstellwinkel der Rotorblätter ungleich über den Umfang angesteuert wird und dadurch die Richtung des Auftriebs verändert wird, so dass der Drehflügler die Fluglage, die Flugrichtung beziehungsweise die Fluggeschwindigkeit verändert.

Im Rahmen dieses "blade-pitching" beziehungsweise dieser gezielten Ansteuerung der aerodynamischen Anstellwinkel der einzelnen Rotorblätter, welche meist nicht konstant ist über eine Umdrehung der Rotorblätter, entstehen Schlagbewegungen (auch als "flapping" bezeichnet). Unter solchen Schlagbewegungen werden auf-ab-Bewegungen der Rotorblätter im Wesentlichen vertikal zur Rotorebene verstanden und Corioliskräfte verursachen, wobei gerade diese Corioliskräfte mit der Entstehung der beschriebenen lead-lag-Bewegungen im Zusammenhang stehen.

Insbesondere wurde gefunden, dass durch die derartige Anordnung eines Rings in der erfindungsgemässen Rotorblattkopplungsvorrichtung nahezu alle Drehmomente auf den Rotormast übertragen werden, was besonders direkte und bewegliche beziehungsweise agile Manöver erlaubt.

Im Sinne der vorliegenden Erfindung kann die erfindungsgemässe Rotorblattkopplungsvorrichtung bevorzugt mit dem Rotormast des Hauptrotors gekoppelt werden. Alternativ ist es jedoch auch denkbar, dass die erfindungsgemässe Rotorblattkopplungsvorrichtung am Heckrotor anbringbar ist.

Weitere vorteilhafte Ausgestaltungsformen sind in den abhängigen Patentansprüchen angegeben.

Vorzugsweise ist der Ring aus einem im Wesentlichen in tangentiale Richtung, insbesondere in Umlaufrichtung der mindestens zwei Rotorblätter, steifen Material gebildet.

Gemäss einer bevorzugten Weiterbildung ist der Ring der erfindungsgemässen Rotorblattkopplungsvorrichtung einstückig ausgebildet. Alternativ ist es denkbar, dass der Ring mehrteilig ausgestaltet ist. Im Sinne der vorliegenden Erfindung handelt es sich in diesem Zusammenhang sowohl bei einem einstückigen Ring wie auch einem mehrteilig ausgestalteten Ring um ein strukturell starr ausgebildetes Element.

Im Weiteren wird im Sinne der vorliegenden Erfindung unter einem im Wesentlichen in tangentiale Richtung, insbesondere in Umlaufrichtung steif ausgebildeten Ring verstanden, dass der als starrer Körper ausgebildete Ring einen für die übliche Verwendung der erfindungsgemässen Rotorblattkopplungsvorrichtung angemessenen Widerstand gegen elastische Verformung durch üblicherweise auftretende Kräfte und Drehmomente aufweist. Eine solche steife Ausbildung des Rings ist entweder durch die Material- oder Geometriewahl, insbesondere die Dicke des Rings, erzielbar. Vorzugsweise werden als Materialien zur Erzielung der erforderlichen Steifigkeit des Rings Metalle, z.B. Alu, Stahl oder Titan, oder Faserverbundwerkstoffe, z.B. Carbon und / oder Glasfaser, verwendet.

Vorzugsweise ist der Ring derart in der Rotorblattkopplungsvorrichtung angeordnet, dass der Ring und die jeweils in den mindestens zwei Rotorblatthalterungen relativ zueinander kippbar gelagert sind und dabei im mit dem Rotorkopf gekoppelten Zustand der erfindungsgemässen Rotorblattkopplungsvorrichtung keine direkte mechanische Wirkverbindung zwischen Ring und Rotormast besteht, so dass der Ring sozusagen vollständig kardanisch gelagert ist in mehreren sich schneidenden, zueinander angewinkelten Drehlagern, so dass der Ring ähnlich einem Kardanring fungiert.

Alternativ zu keiner solchen direkten, mechanischen Wirkverbindung zwischen Ring und Rotormast kann eine gedämpfte Verbindung zwischen Ring und Rotormast ausgebildet sein, wodurch der Ring weiterhin kardanisch gelagert ist. Besonders bevorzugt ist die gedämpfte Verbindung zwischen Ring und Rotormast in Form mindestens einer, vorzugsweise radial ausgerichteten, Dämpfungsvorrichtung, beispielsweise ein Lineardämpfer, zwischen Ring und mittelbar mit dem drehfest mit dem Rotormast gekoppelten Rotorkopfzentralstück angeordnet. Mit anderen Worten ist im Sinne der vorliegenden Erfindung bevorzugt keine ungedämpfte bzw. starre Verbindung unmittelbar zwischen Ring und Rotormast beziehungsweise mittelbar zwischen Ring und Rotorkopfzentralstück ausgebildet. Ganz besonders bevorzugt entspricht die Anzahl der zwischen Ring und Rotorkopfzentralstück angeordneten, vorzugsweise radial ausgerichteten, Dämpfungsvorrichtungen der Anzahl Rotorblatthalterungen, wobei es unerheblich ist, ob jeweils eine, vorzugsweise radial ausgerichtete, Dämpfungsvorrichtung entlang der Längsrichtung jeweils einer Rotorblatthalterung verlaufend oder in einem beliebigen Winkelabstand zwischen zwei benachbarten Rotorblatthalterungen verlaufend angeordnet ist. Im Weiteren können beispielsweise die, vorzugsweise radial ausgerichteten, Dämpfungsvorrichtungen in derselben Ebene wie der Ring angeordnet sein oder oberhalb beziehungsweise unterhalb der Ringebene angeordnet sein.

Mit anderen Worten durchquert vorzugsweise der Ring die Rotorblatthalterungen und ist am Ort der Durchquerung jeweils in einer Rotorblatthalterung kippbar gelagert, weshalb auch von einem kardanischen Kippen beziehungsweise Neigen des Ringes gesprochen werden kann.

Insbesondere ist der Ring in der Rotorblattkopplungsvorrichtung derart angeordnet, dass der Ring jeweils in den mindestens zwei Rotorblatthalterungen um die "blade-pitch"-Achse kippbar gelagert ist. Im Weiteren ist vorzugsweise zur Erzielung einer derartigen Kippbewegung zwischen der oberen Dämpfungsvorrichtung und der unteren Dämpfungsvorrichtung mindestens ein Kipplager angeordnet. Besonders bevorzugt ist das Kipplager als vorzugsweise konventionelles Gleitlager, beispielsweise ein Kugelgelenklager, oder als elastomeres, sphärisches Lager ausgebildet. Anhand dieses Kipplagers wird vorteilhaft die "blade-pitch"-Rotation aufgenommen sowie kleine Winkelverschiebungen und Verschiebungen in Richtung "blade-pitch"-Achse, welche in Längsrichtung einer jeweiligen Rotorblatthalterung verläuft.

Durch den Einsatz einer Vielzahl von Gleitlagern und / oder Elastomerlagern kann beispielsweise vorteilhaft erzielt werden, erforderlichenfalls Kippbewegungen in mehrere Achsen zu ermöglichen.

Durch eine derartige Anordnung ist der Ring bzw. Kardanring sozusagen schwimmend in der Rotorblattkopplungsvorrichtung angeordnet. Dadurch wird vorteilhaft erzielt, dass Kräfte, welche auf ein Rotorblatt wirken, auf alle anderen Rotorblätter in nahezu exakt gleicher Weise und gleichzeitig übertragen werden. Mit anderen Worten handelt es sich bei dem Ring um ein strukturelles Element, welches alle vorhandenen Rotorblatthalterungen gleichermassen über jeweils mindestens eine Dämpfungsvorrichtung verbindet. Die möglichen Bewegungen des Rings bzw. Kardanrings in der Rotorblattkopplungsvorrichtung bringen hierbei gegenüber den bekannten Rotorblattkopplungsvorrichtungen zusätzliche Freiheitsgrade.

Im Weiteren erlaubt der Ring vorteilhaft aufgrund seiner kardanischen, schwimmenden Lagerung in der erfindungsgemässen Rotorblattkopplungsvorrichtung, die erwähnten, auftretenden Schlagbewegungen an der jeweiligen Rotorblatthalterung beziehungsweise am zugehörigen Rotorblatt aufzunehmen.

Weiterhin bevorzugt umfasst die Rotorblattkopplungsvorrichtung zwischen jeweils einer Rotorblatthalterung und dem Ring mindestens eine Dämpfungsvorrichtung, wobei die Dämpfungsvorrichtung die Rotorblatthalterung und den Ring verbindet. Alternativ zu einer Dämpfungsvorrichtung zwischen jeweils einer Rotorblatthalterung und Ring kann eine gedämpfte Verbindung zwischen Ring und Rotormast ausgebildet sein, wobei mit anderen Worten eine ungedämpfte Verbindung (d.h. ein Verzicht auf eine Dämpfungsvorrichtung) zwischen jeweils einer Rotorblatthalterung und dem Ring, insbesondere zwischen dem Kipplager jeweils einer Rotorblatthalterung und dem Ring, ausgebildet sein kann. Es hat sich in diesem Zusammenhang gezeigt, dass bei einer ungedämpften Verbindung zwischen jeweils einer Rotorblatthalterung und dem Ring eine unerwünscht starke Verschiebung des Rings aus einer konzentrischen Lage des Rings zur Rotationsachse des Rotormasts im Nichtbetriebszustand während des Betriebs des Rotorkopfs in eine nicht-konzentrische Lage des Rings zur Rotationsachse des Rotormasts herausbewegen kann, wobei vorteilhaft die zu starke Verschiebung durch die, vorzugsweise radial ausgerichteten, Dämpfungsvorrichtungen als gedämpfte Verbindung zwischen Ring und Rotormast zumindest teilweise kompensierbar ist.

Vorzugsweise umfasst jeweils eine Rotorblatthalterung eine obere Rotorblatthalterungsplatte und eine untere Rotorblatthalterungsplatte, wobei eine obere Dämpfungsvorrichtung zwischen oberer Rotorblatthalterungsplatte und Ring und gegenüberliegend eine untere Dämpfungsvorrichtung zwischen unterer Rotorblatthalterungsplatte und Ring angeordnet sind. Insbesondere ist also der Ring bevorzugt mittels zwei am Ring gegenüberliegend angeordneten Dämpfungsvorrichtungen in den mindestens zwei, vorzugsweise zweiteilig ausgestalteten, Rotorblatthalterungen gelagert. Mit anderen Worten ist der Ring sozusagen sandwichartig zwischen zwei Dämpfungsvorrichtungen in den Rotorblatthalterungen gelagert.

Alternativ ist es möglich, dass zwischen jeweils einer Rotorblatthalterung und dem Ring eine einteilig ausgestaltete Dämpfungsvorrichtung derart angeordnet und ausgestaltet ist, dass die im Betrieb des Rotorkopfs erforderlichen Steifigkeits- und Dämpfungseigenschaften erfüllt ist.

Weiterhin bevorzugt umfasst die obere Dämpfungsvorrichtung mindestens zwei obere Gummielemente und die untere Dämpfungsvorrichtung mindestens zwei untere Gummielemente und die Gummielemente sind derart angeordnet, dass die Kippbewegung des kippbar gelagerten Rings gedämpft ist. Im Zusammenhang mit dem in Umlaufrichtung steif ausgebildeten Ring bzw. Kardanring erlaubt somit eine derart zum Ring angeordnete Dämpfungsvorrichtung mit Gummielementen vorteilhaft, dass der Ring relativ zu einer jeweiligen Rotorblatthalterung eine gedämpfte Kippbewegung vollzieht. Mit anderen Worten werden die Gummielemente auf Scherung beansprucht dadurch die lead-lag-Bewegungen gedämpft.

Vorzugsweise umfassen die mindestens zwei Rotorblatthalterungen jeweils ein elastomeres, sphärisches Lager. Besonders bevorzugt sind die mindestens zwei elastomeren, sphärischen Lager derart ausgestaltet und in der Rotorblattkopplungsvorrichtung angeordnet, dass die mindestens zwei Rotorblatthalterungen sich bei der Rotation in die Umlaufrichtung flexibel verhalten und die mindestens zwei Rotorblatthalterungen relativ zum Rotorkopfzentralstück bezüglich einer Rotorlängsachse schwenkbewegbar um eine im Wesentlichen vertikal zur Rotorebene stehende Schwenkachse sind und dadurch "lead-lag"-Bewegungen erlauben. Im Weiteren ist das elastomere, sphärische Lager derart ausgestaltet, dass sich das elastomere, sphärische Lager in Richtung der Schlagbewegungen flexibel verhält. Zudem sind die elastomeren, sphärischen Lager derart ausgestaltet, um sich gegenüber "blade-pitch"-Rotationen flexibel zu verhalten.

Unter einem flexiblen Verhalten des elastomeren, sphärischen Lagers wird eine für den Betrieb des Rotorkopfs erforderliche Beweglichkeit in die jeweilig gewünschte Richtung verstanden.

Im Weiteren sind die elastomeren, sphärischen Lager vorzugsweise derart ausgestaltet, um sich gegenüber allen translatorischen Verschiebungen steif zu verhalten. In diesem Zusammenhang sind aufgrund dieser translatorischen Steifigkeit bevorzugt die mindestens zwei elastomeren, sphärischen Lager derart ausgestaltet und in der Rotorblattkopplungsvorrichtung angeordnet, dass die Rotorblatthalterungen sich in Verlaufsrichtung der Rotorachse im Wesentlichen steif verhalten.

Vorzugsweise weist das Rotorkopfzentralstück mindestens zwei Durchbrüche auf, wobei jeweils in einem Durchbruch ein elastomeres, sphärisches Lager angeordnet ist.

Solche elastomere, sphärische Lager bewirken vorteilhaft eine Übertragung der Zentrifugallast von jeweils einer Rotorblatthalterung zum Rotormast. Insbesondere übertragen solche elastomere, sphärische Lager die Zentrifugalkraft (unter Druck) und lassen Schlag-, Schwenk-und so genannte "blade-pitch"-Rotationen beziehungsweise -bewegungen zu. Die Verwendung von solchen elastomeren, sphärischen Lagern erlaubt zudem keine grossen Verformungen und verhindert eine Kollision der Rotorblattanordnung mit dem Rotormast, d.h. ein so genanntes "Mast Bumping". Im Sinne der vorliegenden Erfindung wird unter dem Begriff "elastomer" verstanden, dass als Material vorzugsweise Gummi verwendet wird und dass dadurch die sphärischen Lager sich bei Zug- und Druckbelastungen elastisch verformen, sich aber danach wieder in ihre ursprüngliche, unverformte Gestalt zurückfinden.

Die Steifigkeit des Rings ist bevorzugt wesentlich grösser als die Steifigkeit der Gummielemente in den Dämpfungsvorrichtungen und die elastomeren, sphärischen Lager der Rotorblatthalterungen. Dies hat den Vorteil, dass Bewegungen, z.B. die lead-lag-Bewegung, in den elastomeren, sphärischen Lagern stattfinden beziehungsweise eine Dämpfung der lead-lag-Bewegungen bewirkt wird.

Ein weiterer Aspekt der vorliegenden Erfindung betrifft einen Rotorkopf umfassend eine erfindungsgemässe Rotorblattkopplungsvorrichtung zur Kopplung mit einem Rotormast. Bevorzugt umfasst der Rotorkopf eine Taumelscheibe, wobei die Taumelscheibe mittels Blattverstellstangen in direkter Wirkverbindung mit mindestens einer Rotorblatthalterung der Rotorblattkopplungsvorrichtung steht, um einen Anstellwinkel eines zur mindestens einen Rotorblatthalterung zugehörigen Rotorblatts einzustellen. Dadurch wird die so genannte Blattanstellwinkel beziehungsweise der "blade pitch" bestimmt.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben. Es zeigen:
- Fig. 1: eine perspektivische Seitenansicht einer ersten bevorzugten Ausführungsform der erfindungsgemässen Rotorblattkopplungsvorrichtung;
- Fig. 2: eine Aufsicht einer erfindungsgemässen Rotorblattkopplungsvorrichtung;
- Fig. 3: einen Schnitt entlang A-A in Fig. 2 durch eine Rotorblatthalterung der ersten bevorzugten Ausführungsform der erfindungsgemässen Rotorblattkopplungsvorrichtung;
- Fig. 4: einen Schnitt entlang B-B in Fig. 2 zwischen der Rotorblatthalterung, Dämpfungsvorrichtungen und Ring im Bereich einer Aussparung des Rings;
- Fig. 5: eine Funktionsskizze der ersten bevorzugten Ausführungsform der erfindungsgemässen Rotorblattkopplungsvorrichtung;
- Fig. 6: eine perspektivische Seitenansicht einer zweiten bevorzugten Ausführungsform der erfindungsgemässen Rotorblattkopplungsvorrichtung;
- Fig.7: einen in Fig. 6 angedeuteten Schnitt C-C durch eine Rotorblatthalterung der zweiten bevorzugten Ausführungsform der erfindungsgemässen Rotorblattkopplungsvorrichtung;
- Fig. 8: eine Funktionsskizze der zweiten bevorzugten Ausführungsform der erfindungsgemässen Rotorblattkopplungsvorrichtung.

### Beschreibung

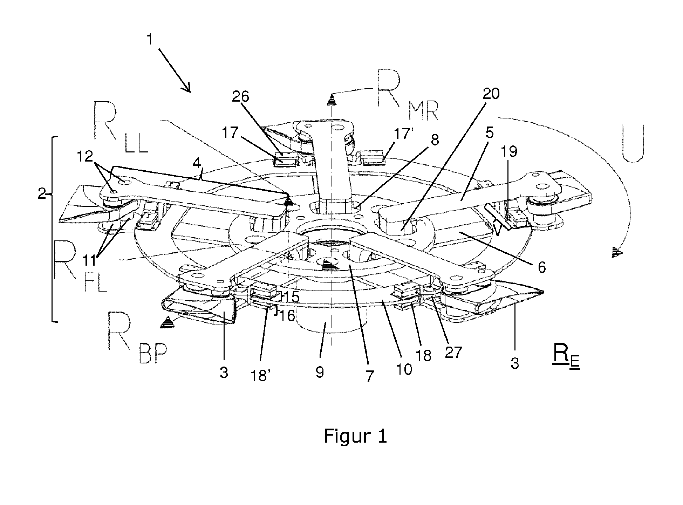

Fig. 1 zeigt eine perspektivische Seitenansicht einer ersten bevorzugten Ausführungsform der erfindungsgemässen Rotorblattkopplungsvorrichtung 2 eines Rotorkopfs 1. Am Rotorkopf 1 sind mittels der erfindungsgemässen Rotorblattkopplungsvorrichtung 2 fünf Rotorblätter 3 befestigt. Die Rotorblattkopplungsvorrichtung 2 umfasst ein Rotorkopfzentralstück 7 und mindestens zwei daran befestigte Rotorblatthalterungen 4 zur Aufnahme der mindestens zwei in einer Rotorebene R_{E} liegenden Rotorblätter 3. Im Weiteren weist das in Fig. 1 gezeigte, als Scheibe ausgestaltete Rotorkopfzentralstück 7 Durchbrüche 8 auf. In den fünf, als Langloch ausgestalteten Durchbrüchen 8 sind elastomere, sphärische Lager 20 angeordnet. Das Rotorkopfzentralstück 7 ist drehfest gekoppelt mit einem um eine Rotormastachse R_{MR} rotierbar ausgestalteten Rotormast 9, wobei der Rotormast 9 mittels eines hier nicht gezeigten Antriebs in Rotation versetzbar ist und bei Rotation in eine Umlaufrichtung U die zum Fliegen notwendige Auftriebskraft bewirkt wird. Die in Fig. 1 teilweise gezeigten, fünf Rotorblätter 3 sind jeweils mit einer Rotorblatthalterung 4 drehfest verbunden. Die Rotorblatthalterungen 4 umfassen jeweils eine obere Rotorblatthalterungsplatte 5 und eine untere Rotorblatthalterungsplatte 6. Die Rotorblatthalterungsplatten 5 und 6 weisen in einem äusseren, radialen Bereich Öffnungen 12 zur Aufnahme von Bolzen 11 auf. Mittels der Bolzen 11 ist jeweils ein Rotorblatt 3 mit der oberen Rotorblatthalterungsplatte 5 sowie der unteren Rotorblatthalterungsplatte 6 drehfest fixiert.

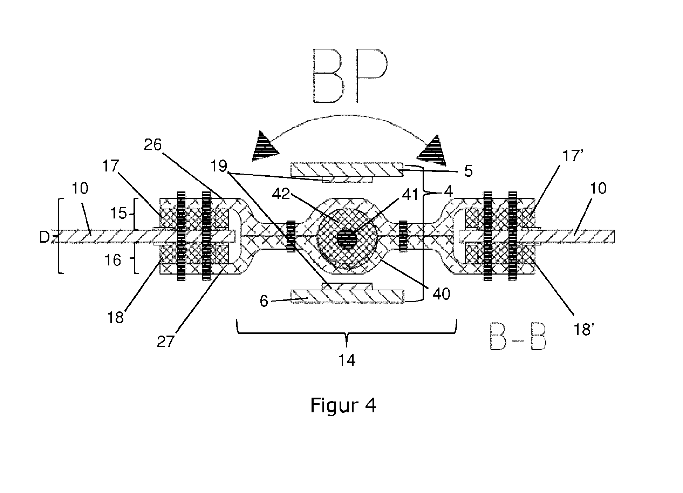

Die in Fig. 1 gezeigte Rotorblattkopplungsvorrichtung 2 umfasst als Verbindungsmittel zwischen den Blatthalterungen 4 im Weiteren einen geschlossenen, einstückigen und kreisförmigen Ring 10, welcher zwischen der oberen Rotorblatthalterungsplatte 5 und der unteren Rotorblatthalterungsplatte 6 angeordnet ist, d.h. durch die fünf in Fig. 1 gezeigten Rotorblatthalterungen 4 verlaufend beziehungsweise die Rotorblatthalterungen 4 durchquerend angeordnet ist, und eine zumindest mittelbare Verbindung zwischen allen fünf Rotorblatthalterungen 4 ausbildet. Jeweils am Ort der Durchquerung der Rotorblatthalterungen 4 über einen Verbindungsabschnitt V ist der geschlossene Ring 10 Rotorblatthalterung 4 relativ zueinander kippbar gelagert. Mit anderen Worten ist eine jeweilige Rotorblatthalterung 4 und der Ring 10 derart - wie in Fig. 4 im Detail gezeigt - zueinander kippbar gelagert, dass der Ring eine Kippbewegung im Rahmen einer Blattanstellwinkelveränderung der Rotorblatthalterung 4 nicht mitmacht.

Wie in diesem Zusammenhang in Fig. 1 ersichtlich ist, besteht keine direkte Verbindung zwischen dem Ring 10 und dem Rotormast 9, womit der als Kardanring fungierende Ring 10 sozusagen schwimmend in der Rotorblattkopplungsvorrichtung 2 angeordnet ist, wodurch vorteilhaft Kräfte, welche auf ein Rotorblatt 3 wirken, auf alle anderen Rotorblätter 3 in exakt gleicher Weise und gleichzeitig übertragen werden.

Die elastomeren, sphärischen Lager 20 sind jeweils mit einer oberen Rotorblatthalterungsplatte 5 und einer unteren Rotorblatthalterungsplatte 6 verbunden. Durch eine derartige Anordnung der elastomeren, sphärischen Lager 20 ist die Vielzahl von Rotorblatthalterungen 4 bei Rotation in die Umlaufrichtung U flexibel beziehungsweise teilweise schwenkbewegbar, während sich die Rotorblatthalterungen 4 in Verlaufsrichtung der Rotormastachse R_{MR} im Wesentlichen steif verhalten.

Zwischen der oberen Rotorblatthalterungsplatte 5 und dem Ring 10 ist eine obere Dämpfungsvorrichtung 15 angeordnet, während gegenüberliegend zwischen der unteren Rotorhalterungsplatte 6 und dem Ring 10 eine untere Dämpfungsvorrichtung 16 angeordnet ist, so dass der Ring 10 sozusagen sandwichartig zwischen den Dämpfungsvorrichtungen 15, 16 und Rotorblatthalterungsplatten 5, 6 gelagert ist. Wie im Weiteren in Fig. 1 ersichtlich, umfasst die obere Dämpfungsvorrichtung 15 zwei Gummielemente 17, 17' und die untere Dämpfungsvorrichtung 16 zwei Gummielemente 18, 18'.

Über eine in Fig. 1 nicht gezeigte Taumelscheibe, gekoppelt mit mindestens einer in Fig. 1 nicht gezeigten Blattverstellstange, wobei die Blattverstellstange wiederum mit jeweils einer Rotorblatthalterung 4 gekoppelt ist, kann mittels Drehung der Rotorblatthalterungen 4 um die "blade-pitch"-Achse R_{BP} der Anstellwinkel der Rotorblätter 3 gegenüber der anströmenden Luft eingestellt werden (so genanntes "blade pitching").

Von hier an und im Folgenden bezeichnen gleiche Referenzzeichen gleiche Komponenten in den Figuren.

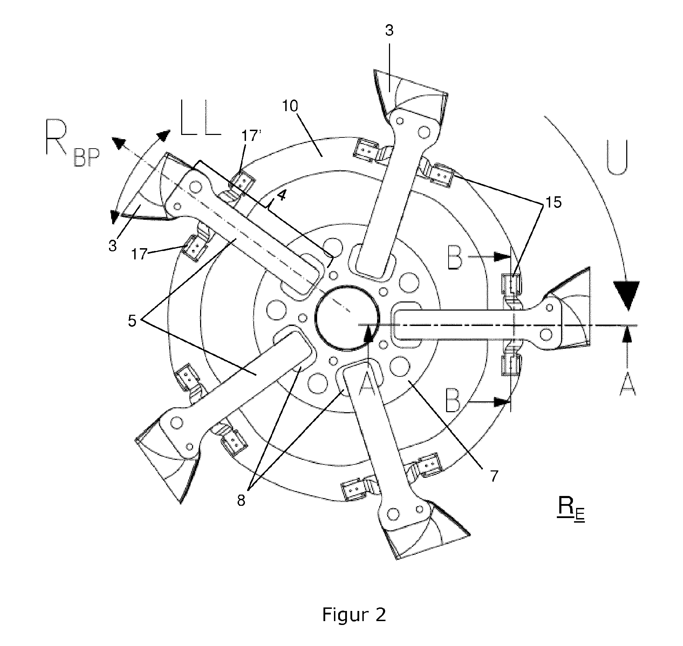

Fig. 2 zeigt eine Aufsicht einer erfindungsgemässen Rotorblattkopplungsvorrichtung 2. Wie in Fig. 2 gezeigt ist zwischen dem Ring 10 und der oberen Blatthalterungsstange 5 jeweils eine obere Dämpfungsvorrichtung 15 angeordnet.

Wie in Fig. 2 angedeutet erlauben die elastischen, sphärischen Lager (nicht ersichtlich in Fig. 2) jeweils eine Schwenkbewegung LL um eine Schwenkachse R_{LL} im Zusammenhang mit den bereits beschriebenen, in Abhängigkeit der Ausrichtung eines Rotorblatts 3 auftretenden lead-lag-Bewegungen. Die Schwenkbewegung LL kann in der Rotorebene R_{E} in Umlaufrichtung U ("lead") oder entgegengesetzt zur Umlaufrichtung U ("lag") erfolgen.

Im Weiteren werden die in Fig. 2 gezeigten Gummielemente 17, 17' der Dämpfungsvorrichtung 15 (sowie die in Fig. 2 nicht gezeigten Gummielemente 18, 18' der unteren Dämpfungsvorrichtung 16) auf Scherung beansprucht und wirken dämpfend beziehungsweise federnd auf die Schwenkbewegung LL.

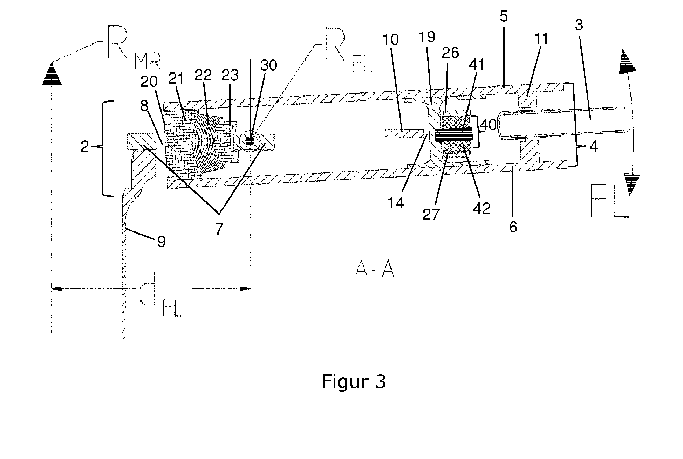

Fig. 3 zeigt schematisch einen in der Fig. 2 angedeuteten Schnitt A-A durch eine Rotorblatthalterung 4 der erfindungsgemässen Rotorblattkopplungsvorrichtung 2. Wie in Fig. 3 ersichtlich, weist der Ring 10 im Bereich der Rotorblatthalterung 4 eine Aussparung 14 auf. In der Aussparung 14 ist zwischen der oberen Rotorblatthalterungsplatte 5 und der unteren Rotorblatthalterungsplatte 6 ein Abstandhalter 19 angeordnet und mit den Rotorblatthalterungsplatten 5, 6 fest verbunden. Wie im Weiteren in Fig. 3 ersichtlich ist ein Kipplager 40 einseitig mit dem Abstandhalter 19 fest verbunden. Im Weiteren ist in Fig. 3 ersichtlich, dass ein aus dem Kipplager 40 hervorstehender Kipplagerkern 41 im Abstandhalter 19 angeordnet ist, wobei der Kipplagerkern 41 im Abstandhalter 19 fest fixiert ist und der Kipplagerkern 41 aus einem steifen Material ausgebildet ist. Zudem umfasst das Kipplager 40 ein Elastomer 42, wobei vorzugsweise als Material ein Gummi verwendet wird. Ein solches als Gummi ausgestaltetes Elastomer 42 erlaubt vorteilhaft gewisse Dämpfungseigenschaften.

In Fig. 3 ist im Weiteren der Aufbau des elastomeren, sphärischen Lagers 20 angeordnet in einem Durchbruch 8 des Rotorkopfzentralstücks 7 ersichtlich. Das elastomere, sphärische Lager 20 umfasst eine, vorzugsweise metallische, Lagerschale 22 in Form eines Kugelsegments, welche zwischen einer Elastomerschicht 21 und einer Elastomerschicht 23 angeordnet ist. Die als Kugelsegment ausgestaltete Lagerschale 22 definiert eine Schlagachse 30, zu welcher das Lager 20 rotierbar gelagert ist. Das elastomere, sphärische Lager 20 ist für Rotationen um die Schlagachse 30 derart flexibel ausgestaltet, um eine Schlagbewegung FL der jeweiligen Rotorblatthalterung 4 beziehungsweise zugehörigem Rotorblatt 3 zu erlauben. In diesem Zusammenhang erlaubt der Ring 10 aufgrund seiner kardanischen, schwimmenden Lagerung in der erfindungsgemässen Rotorblattkopplungsvorrichtung 2, die auftretenden Schlagbewegungen FL an der jeweiligen Rotorblatthalterung 4 beziehungsweise dem zugehörigen Rotorblatt 3 aufzunehmen. Falls die Schlagachse 30 direkt auf die Rotormastachse R_{MR} fällt beziehungsweise der Abstand d_{FL} zwischen Rotormastachse R_{MR} und Schlagachse 30 null ist, werden kaum Drehmomente auf den Rotormast übertragen. Je weiter die Schlagachse 30 des elastomeren, sphärischen Lagers 20 radial vom Rotormast 9 beabstandet ist, desto grösser ist das auf den Rotormast 9 übertragene Drehmoment.

In Fig. 4 ist schematisch ein in der Fig. 2 angedeuteten Schnitt B-B gezeigt zwischen der Rotorblatthalterung 4, Dämpfungsvorrichtungen 15, 16 und Ring 10 im Bereich einer Aussparung 14 des Rings 10. Zwischen der oberen Dämpfungsvorrichtung 15 und der unteren Dämpfungsvorrichtung 16 ist das Kipplager 40 im Wesentlichen mittig zur Rotorblatthalterung 4 angeordnet, wodurch der Ring 10 jeweils in den mindestens zwei Rotorblatthalterungen 4 kippbar gelagert ist. Mit anderen Worten ist bei der vorliegenden, ersten bevorzugten Ausführungsform das Kipplager 40 über eine die obere Dämpfungsvorrichtung 15 und die untere Dämpfungsvorrichtung 16 umfassende Dämpfungsvorrichtung D mittelbar mit dem Ring 10 verbunden, wodurch eine dämpfende Verbindung zwischen einer Rotorblatthalterung 4 und dem Ring 10 erzielt wird. Im Weiteren umfasst die obere Dämpfungsvorrichtung 15 einen oberen Befestigungsarm 26 und die untere Dämpfungsvorrichtung 16 einen unteren Befestigungsarm 27. Die Befestigungsarme 26, 27 halten das Kipplager 40 fest in Position und dienen auf zwei gegenüberliegenden Seiten der Befestigung der Dämpfungsvorrichtungen 15, 16 in der Aussparung 14. Das Kipplager 40 ist um die "blade-pitch"-Achse R_{BP} kippbar, wie durch den Doppelpfeil BP angedeutet, wobei es sich beim Kipplager 40 um ein Gleitlager oder um ein elastomeres, sphärisches Lager beziehungsweise Elastomerlager handeln kann. Wie bereits erläutert ist das Kipplager 40 mit einem Abstandhalter 19 fest verbunden.

Im Weiteren zeigt Fig. 4 einen Abstandhalter 19, dessen Aufbau und Anordnung zwischen der oberen Rotorblatthalterungsplatte 5 und der unteren Rotorblatthalterungsplatte 6 in Fig. 3 insbesondere ersichtlich ist.

Die obere Dämpfungsvorrichtung 15 umfasst im Weiteren zwischen dem oberen Befestigungsarm 26 und dem Ring 10 auf einer Seite das Gummielement 17 und auf der gegenüberliegenden Seite das Gummielement 17'. Die untere Dämpfungsvorrichtung 16 umfasst zwischen dem unteren Befestigungsarm 27 und dem Ring 10 auf einer Seite das Gummielement 18 und auf der gegenüberliegenden Seite das Gummielement 18'. Die Gummielemente 17, 17', 18, 18' werden während des Betriebs des Rotorkopfs 1 auf Scherung beansprucht, wodurch in vorteilhafter Weise die lead-lag-Bewegung gedämpft wird.

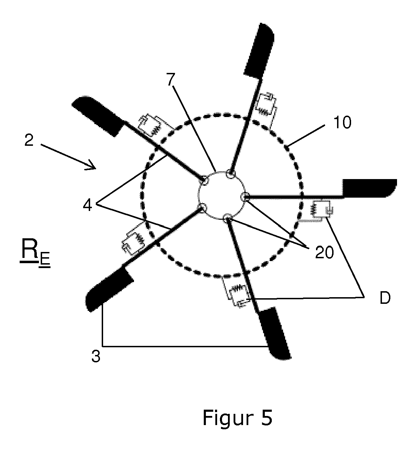

Fig. 5 zeigt eine Funktionsskizze der erfindungsgemässen Rotorblattkopplungsvorrichtung 2. Anhand dieser Funktionsskizze wird mittels Dämpfungsvorrichtungen D (wie z.B. die in den Fig. 4 gezeigten oberen und unteren Dämpfungsvorrichtungen 15, 16) verdeutlicht, dass durch die schwimmende Anordnung des Rings 10 in der erfindungsgemässen Rotorblattkopplungsvorrichtung 2 Kräfte, welche jeweils auf ein Rotorblatt 3 wirken, auf alle anderen Rotorblätter 3 in nahezu exakt gleicher Weise gleichzeitig übertragen werden. Im Weiteren wird durch die Fig. 5 verdeutlicht, dass im mit dem Rotorkopf 1 gekoppelten Zustand der erfindungsgemässen Rotorblattkopplungsvorrichtung 2 keine direkte mechanische Wirkverbindung zwischen Ring 10 und Rotormast (nicht angedeutet in Fig. 5) besteht. Die elastomeren, sphärischen Lager 20 angeordnet in einem Durchbruch (nicht ersichtlich in Fig. 5) des Rotorkopfzentralstücks 7 sind als Kreise dargestellt.

Im Betriebszustand des Drehflüglers sind die Rotorblätter 3 in Umlaufrichtung U in Rotation versetzt. Über die Taumelscheibe sowie mindestens einer damit gekoppelten Blattverstellstange, welche wiederum mit jeweils einer Rotorblatthalterung 4 gekoppelt ist, kann mittels Drehung um R_{BP} der Rotorblatthalterung 4 der Anstellwinkel der Rotorblätter 3 gegenüber der anströmenden Luft eingestellt werden, wodurch der Drehflügler steigt oder sinkt, die so genannte kollektive Blattverstellung beziehungsweise der "blade pitch". Über die Taumelscheibe kann ebenfalls die gesamte Rotorebene R_{E} geneigt werden, wodurch ein Schub für eine horizontale Bewegung (vor / zurück / seitlich) des Drehflüglers bewirkt wird. Hierbei treten in Abhängigkeit der Stellung der Rotorblätter aufgrund von Trägheitskräften die erläuterten lead-lag-Bewegungen auf, welche durch die erfindungsgemässe Rotorblattkopplungsvorrichtung 2 kompensierbar sind.

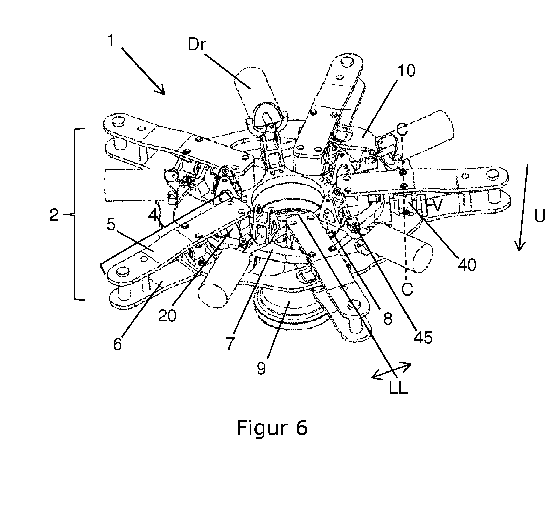

Fig. 6 zeigt eine perspektivische Seitenansicht einer zweiten bevorzugten Ausführungsform der erfindungsgemässen Rotorblattkopplungsvorrichtung 2 eines Rotorkopfs 1, wobei am Rotorkopf 1 mittels der erfindungsgemässen Rotorblattkopplungsvorrichtung 2 fünf Rotorblätter (nicht gezeigt in Fig. 6) befestigbar sind. Die in Fig. 6 gezeigte Rotorblattkopplungsvorrichtung 2 umfasst ein drehfest mit dem Rotormast 9 gekoppeltes Rotorkopfzentralstück 7 und daran befestigte Rotorblatthalterungen 4 zur Aufnahme von Rotorblättern 3.

Im Weiteren weist das als Scheibe ausgestaltete Rotorkopfzentralstück 7 Durchbrüche 8 auf. In den fünf, als Langloch ausgestalteten Durchbrüchen 8 ist jeweils ein elastomeres, sphärisches Lager 20 angeordnet, wobei die Rotorblatthalterungen 4 bei Rotation in die Umlaufrichtung U flexibel beziehungsweise teilweise schwenkbewegbar sind.

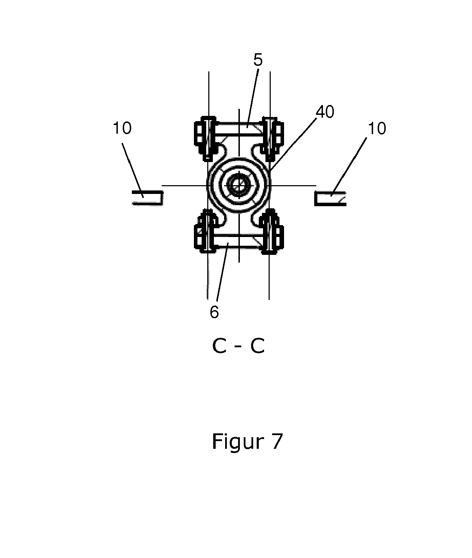

Am Ort der Durchquerung der Rotorblatthalterungen 4 über einen Verbindungsabschnitt V ist der geschlossene Ring 10 und eine Rotorblatthalterung 4 relativ zueinander kippbar gelagert. Dabei weist der geschlossene Ring 10 im Verbindungsabschnitt V eine Aussparung 14 in Form eines Langlochs auf, in welcher ein Kipplager 40 angeordnet ist. Das Kipplager 40 einer Blatthalterung 4 ist in dieser zweiten bevorzugten Ausführungsform ungedämpft und direkt mit dem Ring verbunden (siehe hierzu auch Fig. 7). Im Weiteren weist (verglichen zum Kipplager 40 der ersten Ausführungsform) vorzugsweise das Kipplager 40 der zweiten bevorzugten Ausführungsform eine derartige Ausgestaltung auf, dass eine Verschiebbarkeit des Ringsder Rotorblätter gewährleistet ist.

Wie in Fig. 6 ersichtlich sind im Weiteren - beispielhaft in Umlaufrichtung U betrachtet mittig zu jeweils zwei benachbarten Rotorblatthalterungen 4 - zwischen dem drehfest mit dem Rotormast 9 gekoppelten Rotorblattzentralstück 7 und dem Ring 10 radial angeordnete und ausgerichtete Dämpfungsvorrichtungen Dr angeordnet, wodurch mit anderen Worten eine gedämpfte Verbindung zwischen Ring und Rotormast ausgebildet ist und der Ring 10 schwimmend kardanisch gelagert ist. Mittels jeweils eines ersten Kugelkopfgelenks 45 am Rotorkopfzentralstück 7 und eines zweiten Kugelkopfgelenks (nicht ersichtlich in Fig. 6) am Fing 10 sind die radial ausgerichteten Dämpfungsvorrichtungen Dr endseitig sphärisch gelagert angeordnet. Bei der Dämpfungsvorrichtung Dr handelt es sich um einen Lineardämpfer.

Fig. 7 zeigt einen Schnitt C-C durch eine Rotorblatthalterung der in Fig. 6 gezeigten, zweiten bevorzugten Ausführungsform der erfindungsgemässen Rotorblattkopplungsvorrichtung 2. Wie in Fig. 7 ersichtlich steht im Gegensatz zur ersten bevorzugten Ausführungform das Kipplager 40 bei der zweiten bevorzugten Ausführungsform in direkter Wirkverbindung mit der oberen Rotorblatthalterungsplatte 5 und der unteren Rotorblatthalterungsplatte 6. Im Weiteren ist in Fig. 7 ersichtlich, dass im Gegensatz zur ersten bevorzugten Ausführungsform (vgl. Fig. 4) bei der zweiten bevorzugten Ausführungsform keine dämpfende Verbindung zwischen jeweils einer Rotorblatthalterung 4 und dem Ring 10 ausgebildet ist.

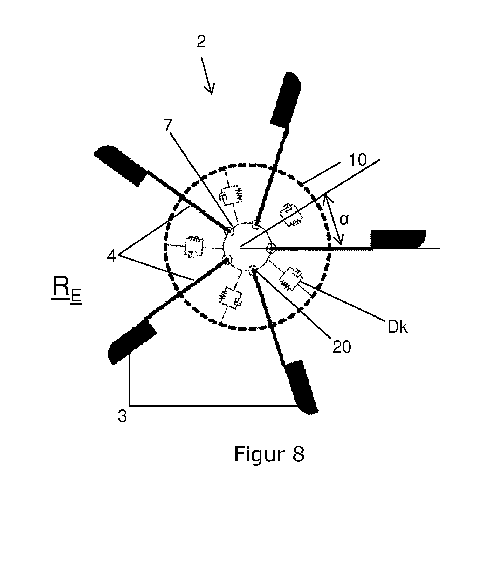

Im Weiteren zeigt Fig. 8 eine Funktionsskizze der zweiten bevorzugten Ausführungsform der erfindungsgemässen Rotorblattkopplungsvorrichtung 2. Die elastomeren, sphärischen Lager 20 angeordnet in einem Durchbruch (nicht ersichtlich in Fig. 8) des Rotorkopfzentralstücks 7 sind als Kreise dargestellt. Fig. 8 zeigt insbesondere, dass zwischen dem Ring 10 und dem mit dem Rotormast (nicht angedeutet in Fig. 8) fest verbundenen Rotorkopfzentralstück einzig durch die radialen Dämpfungsvorrichtungen Dr eine direkte mechanische Verbindung besteht und der Ring schwimmend angeordnet ist. Der Winkelabstand α zwischen einer Blatthalterung 4 und einer radialen Dämpfungsvorrichtung Dr kann beliebig sein.

### Bezugszeichenliste

- 1: Rotorkopf
- 2: Rotorblattkopplungsvorrichtung
- 3: Rotorblatt
- 4: Rotorblatthalterung
- 5: Obere Rotorblatthalterungsplatte
- 6: Untere Rotorblatthalterungsplatte
- 7: Rotorkopfzentralstück
- 8: Durchbruch
- 9: Rotormast
- 10: Ring
- 11: Bolzen
- 12: Öffnung
- 14: Aussparung
- 15: Obere Dämpfungsvorrichtung
- 16: Untere Dämpfungsvorrichtung
- 17, 17': Obere Gummielemente
- 18, 18': Untere Gummielemente
- 19: Abstandhalter
- 20: Elastomeres, sphärisches Lager
- 21: Elastomerschicht
- 22: Lagerschale
- 23: Elastomerschicht
- 26: Oberer Befestigungsarm
- 27: Unterer Befestigungsarm
- 30: Schlagachse
- 40: Kipplager
- 41: Kipplagerkern
- 42: Elastomer
- 45: erstes Kugelkopfgelenk
- BP: blade pitching
- D: Dämpfungsvorrichtung
- Dr: Radiale Dämpfungsvorrichtung (Ring)
- FL: Schlagbewegung
- V: Verbindungsabschnitt
- R_{LL}: Schwenkachse
- R_{E}: Rotorebene
- R_{MR}: Rotormastachse
- R_{BP}: "blade-pitch"-Achse
- d_{FL}: Abstand (Schlagachse)

## Patentansprüche

1. Rotorblattkopplungsvorrichtung (2) zur Kopplung mit einem Rotormast (9) zur Bildung eines Rotorkopfs (1) eines Drehflüglers, insbesondere einen Helikopter oder Hubschrauber, umfassend
- ein Rotorkopfzentralstück (7)
- mindestens zwei am Rotorkopfzentralstück (7) befestigte Rotorblatthalterungen (4) zur Aufnahme von mindestens zwei in einer Rotorebene (R_{E}) liegenden Rotorblättern (3), sowie
- mindestens ein Verbindungsmittel zwischen benachbarten Rotorblatthalterungen (4),
**dadurch gekennzeichnet, dass**
die Rotorblattkopplungsvorrichtung (2) als Verbindungsmittel mindestens einen geschlossenen Ring (10) umfasst, wobei der mindestens eine Ring (10) alle Rotorblatthalterungen (4) an jeweils mindestens einem Verbindungsabschnitt (V) querend und alle Rotorblatthalterungen (4) miteinander zumindest mittelbar verbindend angeordnet ist.

2. Rotorblattkopplungsvorrichtung (2) nach Patentanspruch 1,
**dadurch gekennzeichnet, dass**
der mindestens eine Ring (10) durch alle Rotorblatthalterungen (4) an dem jeweils mindestens einen Verbindungsabschnitt (V) querend durchgeführt und alle Rotorblatthalterungen (4) miteinander zumindest mittelbar verbindend angeordnet ist.

3. Rotorblattkopplungsvorrichtung (2) nach Patentanspruch 1 oder 2,
**dadurch gekennzeichnet, dass**
der Ring (10) aus einem im Wesentlichen in tangentiale Richtung, insbesondere in Umlaufrichtung (U) der mindestens zwei Rotorblätter (3), steif ausgebildet ist.

4. Rotorblattkopplungsvorrichtung (2) nach einem der vorherigen Patentansprüche, **dadurch gekennzeichnet, dass** der Ring (10) derart in der Rotorblattkopplungsvorrichtung (2) angeordnet ist, dass der Ring (10) und die jeweils mindestens zwei Rotorblatthalterungen (4) relativ zueinander kippbar gelagert sind.

5. Rotorblattkopplungsvorrichtung (2) nach einem der vorherigen Patentansprüche,
**dadurch gekennzeichnet, dass**
die Rotorblattkopplungsvorrichtung (2) zwischen jeweils einer Rotorblatthalterung (4) und dem Ring (10) mindestens eine Dämpfungsvorrichtung (15; 16) umfasst.

6. Rotorblattkopplungsvorrichtung (2) nach Patentanspruch 5,
**dadurch gekennzeichnet, dass**
jeweils eine Rotorblatthalterung (4) eine obere Rotorblatthalterungsplatte (5) und eine untere Rotorblatthalterungsplatte (6) umfasst, wobei eine obere Dämpfungsvorrichtung (15) zwischen oberer Rotorblatthalterungsplatte (5) und Ring (10) und gegenüberliegend eine untere Dämpfungsvorrichtung (16) zwischen unterer Rotorblatthalterungsplatte (6) und Ring (10) angeordnet sind.

7. Rotorblattkopplungsvorrichtung (2) nach Patentanspruch 6,
**dadurch gekennzeichnet, dass**
die obere Dämpfungsvorrichtung (15) mindestens zwei obere Gummielemente (17; 17') und die untere Dämpfungsvorrichtung (16) mindestens zwei untere Gummielemente (18; 18') umfasst und dass die Gummielemente (17; 17'; 18; 18') derart angeordnet sind, um die Kippbewegung des kippbar gelagerten Rings (10) zu dämpfen.

8. Rotorblattkopplungsvorrichtung (2) nach einem der Patentansprüche 1 bis 4,
**dadurch gekennzeichnet, dass**
zwischen Ring (10) und Rotormast (9) eine gedämpfte Verbindung ausgebildet ist.

9. Rotorblattkopplungsvorrichtung (2) nach einem der vorherigen Patentansprüche,
**dadurch gekennzeichnet, dass**
die mindestens zwei Rotorblatthalterungen (4) jeweils ein elastomeres, sphärisches Lager (20) umfassen.

10. Rotorblattkopplungsvorrichtung (2) nach Patentanspruch 9,
**dadurch gekennzeichnet, dass**
die mindestens zwei elastomeren, sphärischen Lager (20) derart ausgestaltet und in der Rotorblattkopplungsvorrichtung (2) angeordnet sind, dass die mindestens zwei Rotorblatthalterungen (4) sich bei Rotation in die Umlaufrichtung (U) flexibel verhalten und die mindestens zwei Rotorblatthalterungen (4) relativ zum Rotorkopfzentralstück (7) schwenkbewegbar um die Schwenkachse (R_{LL}) sind.

11. Rotorblattkopplungsvorrichtung (2) nach Patentanspruch 9 oder 10, **dadurch gekennzeichnet, dass**
das Rotorkopfzentralstück (7) mindestens zwei Durchbrüche (8) aufweist, wobei jeweils in einem Durchbruch (8) ein elastomeres, sphärisches Lager (20) angeordnet ist.

12. Rotorkopf (1) umfassend eine Rotorblattkopplungsvorrichtung (2) zur Kopplung mit einem Rotormast (9) nach einem der vorherigen Patentansprüche.

13. Rotorkopf (1) nach Patentanspruch 12,
**dadurch gekennzeichnet, dass**
der Rotorkopf (1) eine Taumelscheibe umfasst, wobei die Taumelscheibe in direkter Wirkverbindung mit mindestens einer Rotorblatthalterung (4) der Rotorblattkopplungsvorrichtung (2) steht und derart ausgestaltet und angeordnet ist, um einen Anstellwinkel eines zur mindestens einen Rotorblatthalterung (4) zugehörigen Rotorblatts (3) einzustellen.
